# EUROPEAN PATENT SPECIFICATION

(11) **EP 3 135 455 B1**
(45) Date of publication and mention of the grant of the patent: **06.03.2019**
(21) Application number: 16181203.7
(22) Date of filing: 26.07.2016
(51) Int. Cl.: B29C 45/77, B29C 45/50

(54) **INJECTION UNIT**
EINSPRITZEINHEIT
UNITÉ D'INJECTION

(30) Priority: 31.08.2015 JP 2015171518
(43) Date of publication of application: 01.03.2017
(73) Proprietor: SUMITOMO HEAVY INDUSTRIES, LTD., Tokyo 141-6025 (JP)
(72) Inventor: MIYATAKE, Tsutomu, Chiba 263-0001 (JP)
(74) Representative: Louis Pöhlau Lohrentz

(56) References cited:
- EP-A1- 0 967 064
- WO-A1-2005/037519
- DE-U1- 20 321 036
- JP-A- 2007 283 526
- US-A1- 2010 062 095

## Description

### BACKGROUND OF THE INVENTION

### Field of the Invention

Certain embodiments of the present invention relate to an injection unit.

### Description of Related Art

German utility model DE 203 21 036 U1 discloses an injection molding machine in which rotating and linear drive motors for the plasticizing screw are both electric hollow shaft motors. The rotational drive rotor and its bearings may have limited axial movement on the housing for this drive and a pressure sensor is located between the housing and rotor bearings.

In general, injection molding machines include a mold clamping unit which performs closing, clamping, and opening of a mold unit, an injection unit which fills the mold unit with a molding material, or the like. The injection unit includes a cylinder, a nozzle, a screw, a plasticizing motor, an injection motor, and a pressure detector.

The cylinder heats the molding material which is supplied to the inner portion thereof. The nozzle is provided on a front end portion of the cylinder and is pressed by the mold unit. The screw is disposed to be rotatable and to be movable forward and backward in the cylinder.

The plasticizing motor rotates the screw, and the screw feeds the molding material to the front side along spiral grooves of the screw. The molding material is gradually melted while being fed to the front side. The screw is moved backward according to accumulation of a liquid molding material in the front portion of the cylinder.

The injection motor moves the screw forward and backward. According to forward and backward movements of the screw, the injection motor injects the liquid molding material accumulated on the front side of the screw from the nozzle and fills the mold unit with the liquid molding material.

The pressure detector is disposed between the injection motor and the screw, and detects a pressure which is applied from the molding material to the screw, a back pressure with respect to the screw, or the like. The pressure which is applied from the molding material to the screw corresponds to a pressure which is applied from the screw to the molding material.

However, in a case where the injection motor moves forward along with not only the screw but also the plasticizing motor, since the plasticizing motor is heavy, the inertia of objects to be driven by the injection motor increases. Accordingly, an injection unit in which the plasticizing motor is fixed to an injection frame has been developed (for example, refer to International Publication No. WO 2005/037519).

The injection frame includes a front injection support, a rear injection support, and a rod which connects the front and rear injection supports. A stator of the plasticizing motor is fixed to the front injection support, and a stator of an injection motor is fixed to the rear injection support via the pressure detector.

### SUMMARY OF THE INVENTION

In the related art, the pressure detector is disposed between the rear injection support and the injection motor, and the pressure detector is far from the liquid molding material which is accumulated in the front side of the screw. Accordingly, the detection accuracy of a pressure applied to the molding material is low.

The present invention is made in consideration of the above-described circumstances, and a main object thereof is to provide an injection unit in which the inertia of objects to be driven by the injection motor is small and the pressure applied to the molding material can be accurately detected.

In order to achieve the above object, according to an aspect of the present invention, there is provided an injection unit, including: an injection frame to which a stator of a plasticizing motor and a stator of an injection motor are fixed; a rotation movement shaft which is connected to a rotor of the plasticizing motor to be movable forward and backward with respect to the rotor and rotates along with the rotor of the plasticizing motor; a drive shaft which is movable forward and backward with respect to the injection frame and transmits a propulsive force generated by the injection motor to the rotation movement shaft; and a pressure detector which is disposed between the rotation movement shaft and the drive shaft.

### [Effects of the Invention]

According the aspect of the present invention, an injection unit is provided in which the inertia of objects to be driven by the injection motor is small and the pressure applied to the molding material can be accurately detected.

### BRIEF DESCRIPTION OF THE DRAWINGS

Fig. 1 is a view showing an injection molding machine according to an embodiment.
Fig. 2 is a view showing details of the injection unit according to the embodiment.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

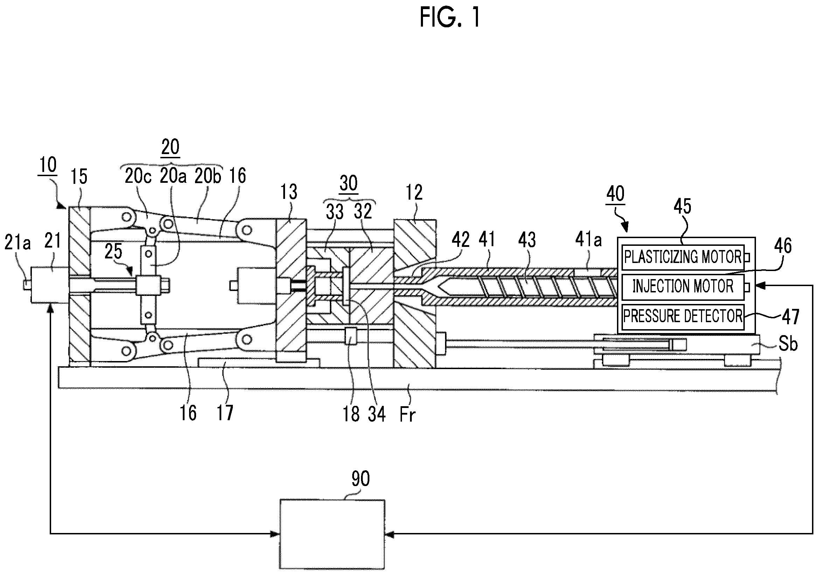

Fig. 1 is a view showing an injection molding machine according an embodiment. The injection molding machines includes a frame Fr, a mold clamping unit 10, an injection unit 40, and a controller 90.

First, a mold clamping unit 10 is described. In the descriptions of the mold clamping unit 10, a movement direction (right direction in Fig. 1) of a movable platen 13 when a mold is closed is defined as a front side, and a movement direction (left direction in Fig. 1) of the movable platen 13 when the mold is open is defined as a rear side.

The mold clamping unit 10 performs opening, clamping, and closing of a mold unit 30. The mold clamping unit 10 includes a stationary platen 12, the movable platen 13, a support platen 15, a tie bar 16, a toggle mechanism 20, a mold clamping motor 21, and a movement conversion mechanism 25.

The stationary platen 12 is fixed to the frame Fr. A stationary mold 32 is attached to a surface of the stationary platen 12 facing the movable platen 13.

The movable platen 13 is movable along a guide (for example, guide rail) 17 which is placed on the frame Fr, and moves forward and backward with respect to the stationary platen 12. A movable mold 33 is attached to a surface of the movable platen 13 facing the stationary platen 12.

By moving the movable platen 13 forward and backward with respect to the stationary platen 12, opening, clamping, and closing of the mold are performed. The mold unit 30 is configured of the stationary mold 32 and the movable mold 33.

The support platen 15 is connected so as to be separated from the stationary platen 12, and is placed to be movable on the frame Fr in mold opening and closing directions. In addition, the support platen 15 may be movable along a guide which is placed on the frame Fr. The guide of the support platen 15 may be also used as the guide 17 of the movable platen 13.

In addition, in the present embodiment, the stationary platen 12 is fixed to the frame Fr, and the support platen 15 is movable in the mold opening and closing directions with respect to the frame Fr. However, the support platen 15 is fixed to the frame Fr, and the stationary platen 12 may be movable in the mold opening and closing directions with respect to the frame Fr.

The stationary platen 12 and the support platen 15 are connected to each other at intervals by the tie bar 16. Aplurality of tie bars 16 may be used. The tie bars 16 are parallel in the mold opening and closing directions, and extend according to a mold clamping force. A mold clamping force detector 18 is provided in at least one tie bar 16. The mold clamping force detector 18 may be a strain gauge type detector, and detects the mold clamping force by detecting strain of the tie bar 16.

In addition, the mold clamping force detector 18 is not limited to the strain gauge type detector, and may be a piezoelectric type detector, a capacitance type detector, a hydraulic type detector, an electromagnetic type detector, or the like, and the attachment position of the mold clamping force detector 18 is also not limited to the tie bar 16.

The toggle mechanism 20 is provided between the movable platen 13 and the support platen 15. The toggle mechanism 20 is configured of a crosshead 20a, a plurality of links 20b and 20c, or the like. One link 20b is oscillatably attached to the movable platen 13, and the other link 20c is attached so as to be oscillated to the support platen 15. The links 20b and 20c are bendably/strechably connected by pins or the like. By moving the crosshead 20a forward and backward, the plurality of links 20b and 20c are bent and stretched, and the movable platen 13 moves forward and backward with respect to the support platen 15.

The mold clamping motor 21 is attached to the support platen 15, moves the crosshead 20a forward and backward, and moves the movable platen 13 forward and backward. The movement conversion mechanism 25, which converts a rotational motion of the mold clamping motor 21 into a linear motion and transmits the linear motion to the crosshead 20a, is provided between the mold clamping motor 21 and the crosshead 20a. For example, the movement conversion mechanism 25 is a ball screw mechanism. The speed of the crosshead 20a is detected by an encoder 21a of the mold clamping motor 21, or the like.

The operation of the mold clamping unit 10 is controlled by the controller 90. The controller 90 controls a mold closing process, a mold clamping process, a mold opening process, or the like.

In the mold closing process, by driving the mold clamping motor 21 and moving the movable platen 13 forward, the movable mold 33 comes into contact with the stationary mold 32.

In the mold clamping process, by further driving the mold clamping motor 21, a mold clamping force is generated. When the mold is clamped, a cavity space 34 is formed between the movable mold 33 and the stationary mold 32, and the cavity space 34 is filled with a liquid molding material. The molding material inside the cavity space 34 is solidified and becomes a molding product.

In the mold opening process, by driving the mold clamping motor 21 and moving the movable platen 13 backward, the movable mold 33 is separated from the stationary mold 32.

In addition, the mold clamping unit 10 of the present embodiment has the mold clamping motor 21 as a drive source. However, instead of the mold clamping motor 21, the mold clamping unit 10 may have a hydraulic cylinder. Moreover, the mold clamping unit 10 may have a mold opening-closing linear motor, and may have a mold clamping electromagnet.

Next, an injection unit 40 is described. Different from the descriptions of the mold clamping unit 10, in descriptions of the injection unit 40, a movement direction (left direction in Fig. 1) of a screw 43 during filling is referred to as a front side, and a movement direction (right direction in Fig. 1) of the screw 43 during plasticizing is referred to as a rear side.

The injection unit 40 is installed on a slide base Sb which is movable forward and backward with the frame Fr, and is movable forward and backward with respect to the mold unit 30. The injection unit 40 is touched on the mold unit 30, and fills the inner portion of the mold unit 30 with the molding material. For example, the injection unit 40 includes a cylinder 41, a nozzle 42, the screw 43, a plasticizing motor 45, an injection motor 46, and a pressure detector 47.

The cylinder 41 heats the molding material which is supplied from a supply port 41a to the inner portion of the cylinder 41. The supply port 41a is formed on the rear portion of the cylinder 41. A heat source such as a heater is provided on the outer circumference of the cylinder 41.

The nozzle 42 is provided on the front end portion of the cylinder 41, and is pressed by the mold unit 30.

The screw 43 is disposed in the cylinder 41 so as to be rotatable and movable forward and backward.

The plasticizing motor 45 rotates the screw 43 to feed the molding material forward along spiral grooves of the screw 43. The molding material is gradually melted by heat of the cylinder 41 while being fed forward. The liquid molding material is fed to the front portion of the screw 43 and is accumulated in the front portion of the cylinder 41, and thus, the screw 43 moves backward.

The injection motor 46 moves the screw 43 forward and backward. The injection motor 46 moves the screw 43 forward, and thus, the liquid molding material accumulated in the front side of the screw 43 is injected from the cylinder 41, and the inner portion of the mold unit 30 is filled with the liquid molding material. Thereafter, the injection motor 46 presses the screw 43 forward, and applies a pressure to the molding material inside the mold unit 30. Accordingly, insufficient molding materials can be replenished. A movement conversion mechanism which converts a rotational motion of the injection motor 46 into a liner motion of the screw 43 is provided between the injection motor 46 and the screw 43.

For example, the pressure detector 47 is disposed between the injection motor 46 and the screw 43, and detects a pressure which is applied from the molding material to the screw 43, a back pressure with respect to the screw 43, or the like. The pressure which is applied from the molding material to the screw 43 corresponds to the pressure which is applied from the screw 43 to the molding material.

The operation of the injection unit 40 is controlled by the controller 90. The controller 90 controls a filling process, a holding pressure process, a plasticizing process, or the like.

In the filling process, the injection motor 46 is driven so as to move the screw 43 forward at a set speed, and the inner portion of the mold unit 30 is filled with the liquid molding material accumulated in the front side of the screw 43. For example, the position or the speed of the screw 43 is detected by an encoder of the injection motor 46, or the like. If the position of the screw 43 reaches a predetermined position, switching from the filling process to the holding pressure process (so called V/P switching) is performed.

In addition, in the filing process, after the position of the screw 43 reaches a predetermined position, the screw 43 may temporarily stop at the predetermined position, and thereafter, the V/P switching may be performed. Immediately before the V/P switching, instead of stopping the screw 43, the screw 43 may move forward or may move backward at a very slow speed.

In the holding pressure process, the injection motor 46 is driven so as to press the screw 43 forward at a set pressure, and a pressure is applied to the molding material inside the mold unit 30. Accordingly, insufficient molding materials can bereplenished. For example, thepressureof the moldingmaterial is detected by the pressure detector 47. In the holding pressure process, the molding material inside the mold unit 30 is gradually cooled, and when the holding pressure process is completed, the inlet of the cavity space 34 is closed by the solidified molding material. This state is referred to as a gate seal, and a backflow of the molding material from the cavity space 34 is prevented. After the holding pressure process, a cooling process starts. In the cooling process, solidification of the molding material inside the cavity space 34 is performed. In order to shorten a molding cycle, the plasticizing process may be performed during the cooling process.

In the plasticizing process, the plasticizing motor 45 is driven so as to rotate the screw 43 at a set rotating speed, and the screw 43 feeds the molding material forward along the spiral grooves of the screw 43. According to this, the molding material is gradually melted. The screw 43 moves backward as the liquid molding material is fed to the front side of the screw 43 and is accumulated in the front portion of the cylinder 41. For example, the rotating speed of the screw 43 is detected by an encoder of the plasticizing motor 45.

In the plasticizing process, in order to restrict an abrupt rearward movement of the screw 43, the injection motor 46 may be driven so as to apply a set back pressure to the screw 43. For example, the back pressure with respect to the screw 43 is detected by the pressure detector 47. If the screw 43 moves backward to the predetermined position and a predetermined amount of the molding materials is accumulated in the front side of the screw 43, the plasticizing process ends.

The controller 90 includes a central processing unit (CPU), and a recording medium such as a memory. By carrying out a program stored in the recording medium using the CPU, the controller 90 controls the mold clamping unit 10, the injection unit 40, or the like.

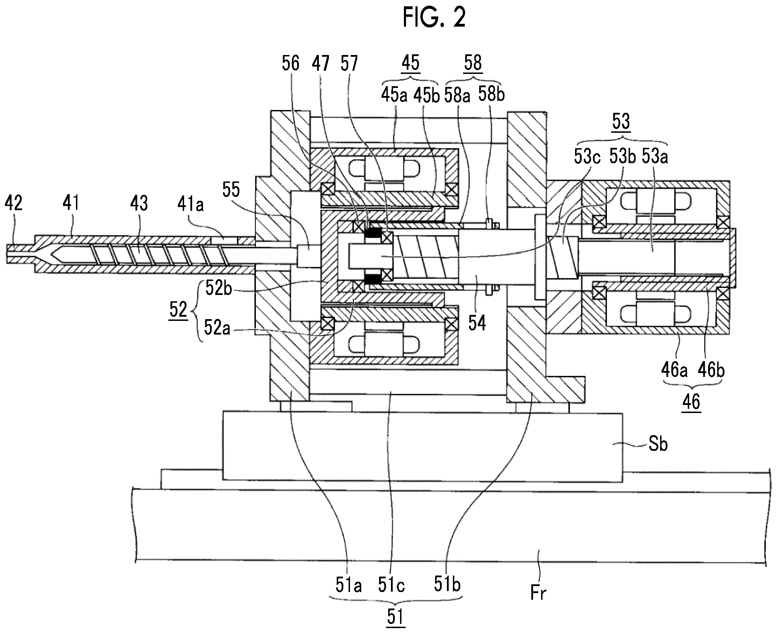

Fig. 2 is a view showing details of the injection unit according to the embodiment. In addition to the cylinder 41, the nozzle 42, the screw 43, the plasticizing motor 45, the injection motor 46, and the pressure detector 47, the injection unit 40 includes an injection frame 51, a rotation movement shaft 52, a drive shaft 53, a ball screw nut 54, a coupling 55, a first bearing 56, a second bearing 57, a rotation restriction mechanism 58, or the like.

The injection frame 51 is configured of a front support portion 51a, a rear support portion 51b, and a connection portion 51c. The front support portion 51a and the rear support portion 51b are connected to each other at intervals by the connection portion 51c, a stator 45a of the plasticizing motor 45 is fixed to the front support portion 51a, and a stator 46a of the injection motor 46 is fixed to the rear support portion 51b. Since the plasticizing motor 45 is fixed, the inertia of objects to be driven by the injection motor 46 is small, and acceleration when the screw 43 starts the forward movement is rapid.

In addition, the plasticizing motor 45 of the present embodiment is fixed to the front support portion 51a. However, the fixing position is not particularly limited, and for example, the plasticizing motor 45 may be fixed to the rear support portion 51b. Similarly, the injection motor 46 of the present embodiment is fixed to the rear support portion 51b. However, the fixing position is not particularly limited, and for example, the injection motor 46 may be fixed to the front support portion 51a.

The rotation movement shaft 52 is connected to a rotor 45b of the plasticizing motor 45 so as to be movable forward and backward, and rotates along with the rotor 45b of the plasticizing motor 45. The rotation of the rotation movement shaft 52 is restricted by the rotor 45b of the plasticizing motor 45, and thus, the rotation movement shaft 52 is rotated by the plasticizing motor 45. The rotation movement shaft 52 is connected to the screw 43 via the coupling 55, and transmits the rotational motion of the plasticizing motor 45 to the screw 43.

The rotation movement shaft 52 is inserted into the rotor 45b of the plasticizing motor 45. The rotor 45b is formed in a tubular shape . A spline nut is formed on the inner circumference of the rotor 45b, a spline shaft is formed on the outer circumference of the rotation movement shaft 52, and the rotor 45b and the rotation movement shaft 52 are spline-coupled to each other.

In addition, the rotation movement shaft 52 of the present embodiment is inserted into the rotor 45b. However, the rotation movement shaft 52 may be provided outside the rotor 45b. That is, the center line of the rotation movement shaft 52 and the center line of the rotor 45b may be deviated from each other. In this case, separately from the rotor 45b, a spline nut which is spline-coupled to the rotation movement shaft 52 is provided. This spline nut is provided so as to be rotatable and to be unmovable forward and backward with respect to the injection frame 51, and a transmission member which transmits the rotation of the rotor 45b to a portion between the spline nut and the rotor 45b maybe disposed therebetween. As the transmission member, abelt, a pulley, or the like is used. In addition, as the transmission member, a gear may be used, and in this case, the gear may be formed on the outer circumference of the spline nut.

The drive shaft 53 moves forward and backward with respect to the injection frame 51, and transmits a repulsive force generated by the injection motor 46 to the rotation movement shaft 52. The transmitted repulsive force is further transmitted from the rotation movement shaft 52 to the screw 43.

For example, the drive shaft 53 includes a spline shaft 53a, a ball screw shaft 53b, and a straight shaft 53c in this order from the rear side toward the front side. The spline shaft 53a, the ball screw shaft 53b, and the straight shaft 53c are disposed on the same straight line and are integrally provided.

The spline shaft 53a is disposed inside a rotor 46b of the injection motor 46. The rotor 46b is formed in a tubular shape. A spline nut is formed on the inner circumference of the rotor 46b, and the rotor 46b and the spline shaft 53a are spline-coupled to each other. The rotation of the spline shaft 53a is restricted with respect to the rotor 46b of the injection motor 46, and the spline shaft 53a is rotated by the injection motor 46.

The ball screw shaft 53b is disposed on the front side of the spline shaft 53a. The ball screw nut 54 is screwed to the ball screw shaft 53b, and the ball screw nut 54 is fixed to the injection frame 51. Accordingly, the rotational motion of the injection motor 46 is converted into the rotational linear motion of the drive shaft 53. The ball screw shaft 53b corresponds to a screw shaft described in claims, and the ball screw nut 54 corresponds to a nut described in claims. In addition, a ball may not be interposed between the screw shaft and the nut.

The straight shaft 53c is disposed on the front side of the ball screw shaft 53b, and is rotatably connected to the rotation movement shaft 52. Accordingly, when the injection motor 46 is driven, the rotational linear motion of the drive shaft 53 can be converted into the linear motion of the rotation movement shaft 52. In addition, when the plasticizing motor 45 is driven, it is possible to restrict the transmission of the rotational motion of the rotation movement shaft 52 to the drive shaft 53.

The straight shaft 53c is disposed inside the rotation movement shaft 52. The rotation movement shaft 52 includes a cylindrical portion 52a, and a lid portion 52b which closes the front side of the cylindrical portion 52a. The screw 43 is connected to the lid portion 52b via the coupling 55, and the straight shaft 53c is connected to the inner circumference of the cylindrical portion 52a via the first bearing 56 and the second bearing 57.

In addition, in the present embodiment, the rotational motion of the injection motor 46 is converted into the rotational linear motion of the drive shaft 53. However, the rotational motion of the injection motor 46 may be converted into the linear motion of the drive shaft 53. For example, the ball screw nut 54 is attached to the injection frame 51 so as to be rotatable and to be unmovable forward and backward, the ball screw nut 54 is rotated by the injection motor 46, and thus, the drive shaft 53 including the ball screw shaft 53b may move forward and backward. In this case, since the injection motor 46 rotates the ball screw nut 54, the drive shaft 53 does not include the spline shaft 53a. Moreover, in this case, the injection motor 46 may be connected to the ball screw nut 54 via a belt, a pulley, or the like.

The pressure detector 47 is disposed between the rotation movement shaft 52 and the drive shaft 53. Compared to a case where the pressure detector 47 is disposed between the rear support portion 51b and the injection motor 46 like the related art, the pressure detector 47 is closer to the liquid molding material which is accumulated on the front side of the screw 43. Accordingly, it is possible to accurately detect the pressure which is applied to the molding material.

The pressure detector 47 may be disposed between the first bearing 56 and the second bearing 57. The first bearing 56 rotatably supports the rotation movement shaft 52 with respect to the pressure detector 47. When the rotation movement shaft 52 is rotationally moved by the plasticizing motor 45, the rotation of the pressure detector 47 can be restricted. Meanwhile, the second bearing 57 rotatably supports the drive shaft 53 with respect to the pressure detector 47. When the rotational linear motion of the drive shaft 53 is performed by the injection motor 46, the rotation of the pressure detector 47 can be restricted.

The pressure detector 47 may be formed in ring shape, and may be disposed between the inner circumferential surface of the cylindrical portion 52a of the rotation movement shaft 52 and the outer circumferential surface of the straight shaft 53c of the drive shaft 53. An outer ring of the first bearing 56 is fixed to the inner circumference of the cylindrical portion 52a, and an inner ring of the first bearing 56 is fixed to the pressure detector 47. In addition, the outer ring of the second bearing 57 is fixed to the pressure detector 47, and the inner ring of the second bearing 57 is fixed to the outer circumference of the straight shaft 53c of the drive shaft 53. For example, as the first bearing 56 or the second bearing 57, a roll bearing, a ball bearing, or the like is used. In a case where the first bearing 56 and the second bearing 57 are bearings which support an axial force in one direction, a bearing which supports an axial force in the opposite direction may be further provided. The number of bearings is not particularly limited.

In addition, the pressure detector 47 may be disposed between a rear end surface of the lid portion 52b of the rotation movement shaft 52 and a front end surface of the straight shaft 53c of the drive shaft 53. In this case, the first bearing 56 is attached to the rear end surface of the lid portion 52b, the second bearing 57 is attached to the front end surface of the straight shaft 53c, and the pressure detector 47 is disposed between the first bearing 56 and the second bearing 57. For example, as the first bearing 56 or the second bearing 57, a thrust bearing or the like is used. In this case, the pressure detector 47 may not be formed in a ring shape, and for example, may be formed in a plate shape.

The rotation restriction mechanism 58 restricts the rotation of the pressure detector 47. In a case where the pressure detector 47 performs wired communication, wiring of communication lines may be easy. In addition, in a case where the pressure detector 47 performs wireless communication, the rotation of the pressure detector 47 may not be limited.

For example, the rotation restriction mechanism 58 engages with both of the pressure detector 47 and the ball screw nut 54. For example, the rotation restriction mechanism 58 is configured of an elongated hole attached tubular portion 58a, and a pin portion 58b which is inserted into the elongated hole of the tubular portion 58a.

The tubular portion 58a is fixed to the pressure detector 47, and the pin portion 58b is fixed to the ball screw nut 54. Moreover, the tubular portion 58a and the pin portion 58b may be inversely disposed. That is, the tubular portion 58a may be fixed to the ball screw nut 54 and the pin portion 58b may be fixed to the pressure detector 47.

The rotation of the pressure detector 47 can be restricted and the forward and backward movements of the pressure detector 47 can be allowed by the elongated hole formed in the tubular portion 58a and the pin portion 58b inserted into the elongated hole. In addition, a member in which the elongated hole is formed may not be the tubular shape, and for example, may be a rod shape.

Moreover, the rotation restriction mechanism 58 of the present embodiment is configured of the elongated hole attached tubular portion 58a and the pin portion 58b. However, the configuration is not particularly limited. For example, the rotation restriction mechanism 58 may be configured of a spline shaft, and a spline nut which is spline-coupled to the spline shaft. In this case, the rotation of the pressure detector 47 can be restricted and the forward and backward movements of the pressure detector 47 can be allowed.

Hereinbefore, the embodiment of the injection unit is described. However, the present invention is not limited to the above-described embodiment or the like, and various modifications and improvements can be applied within a scope of a concept of the present invention described in claims.

## Claims

1. An injection unit (40), comprising:
an injection frame (51) to which a stator (45a) of a plasticizing motor (45) and a stator (46a) of an injection motor (46)are fixed;
a rotation movement shaft (52) which is connected to a rotor (45b) of the plasticizing motor (45) to be movable forward and backward with respect to the rotor and rotates along with the rotor of the plasticizing motor;
a drive shaft (53) which is movable forward and backward with respect to the injection frame (51) and transmits a propulsive force generated by the injection motor (46)to the rotation movement shaft (52);
**characterized by** a pressure detector (47) which is disposed between the rotation movement shaft (52) and the drive shaft (53) .

2. The injection unit (40) according to claim 1,
wherein the rotation movement shaft (52) includes a cylindrical portion (52a), and the pressure detector (47) is disposed inside the cylindrical portion.

3. The injection unit (40) according to claim 1 or 2,
wherein a rotational motion of the injection motor (46) is converted into a rotational linear motion of the drive shaft (53), and
wherein the pressure detector (47) is disposed between a first bearing (56) which rotatably supports the rotation movement shaft (52) with respect to the pressure detector (47) and a second bearing (57) which rotatably supports the drive shaft (53) with respect to the pressure detector (47).

4. The injection unit (40) according to any one of claims 1 to 3, further comprising:
a rotation restriction mechanism (58) which restricts a rotation of the pressure detector (47).

5. The injection unit (40) according to claim 4,
wherein the drive shaft (53) includes a screw shaft (53b), and a nut (54) which is screwed to the screw shaft is fixed to the injection frame (51), and
wherein the rotation restriction mechanism (58) engages with both the pressure detector (47) and the nut (54).

## Patentansprüche

1. Einspritzeinheit (40), die Folgendes umfasst:
ein Einspritzgestell (51), an dem ein Stator (45a) eines Plastifizierungsmotors (45) und ein Stator (46a) eines Einspritzungsmotors (46) befestigt sind,
eine Drehbewegungswelle (52), die mit einem Rotor (45b) des Plastifizierungsmotors (45) verbunden ist, um nach vorn und nach hinten in Bezug auf den Rotor beweglich zu sein, und sich zusammen mit dem Rotor des Plastifizierungsmotors dreht,
eine Antriebswelle (53), die nach vorn und nach hinten in Bezug auf das Einspritzgestell (51) beweglich ist und eine Antriebskraft, die durch den Einspritzungsmotor (46) erzeugt wird, zu der Drehbewegungswelle (52) überträgt,
**gekennzeichnet durch** einen Druckdetektor (47), der zwischen der Drehbewegungswelle (52) und der Antriebswelle (53) angeordnet ist.

2. Einspritzeinheit (40) nach Anspruch 1,
wobei die Drehbewegungswelle (52) einen zylindrischen Abschnitt (52a) umfasst und der Druckdetektor (47) innerhalb des zylindrischen Abschnitts angeordnet ist.

3. Einspritzeinheit (40) nach Anspruch 1 oder 2,
wobei eine Drehbewegung des Einspritzungsmotors (46) in eine drehende lineare Bewegung der Antriebswelle (53) umgewandelt wird und
wobei der Druckdetektor (47) zwischen einem ersten Lager (56), das die Drehbewegungswelle (52) drehbar in Bezug auf den Druckdetektor (47) trägt, und einem zweiten Lager (57), das die Antriebswelle (53) drehbar in Bezug auf den Druckdetektor (47) trägt, angeordnet ist.

4. Einspritzeinheit (40) nach einem der Ansprüche 1 bis 3, die ferner Folgendes umfasst:
einen Drehungsbeschränkungsmechanismus (58), der eine Drehung des Druckdetektors (47) beschränkt.

5. Einspritzeinheit (40) nach Anspruch 4,
wobei die Antriebswelle (53) eine Schraubenwelle (53b) umfasst und eine Mutter (54), die auf die Schraubenwelle geschraubt ist, an dem Einspritzgestell (51) befestigt ist und
wobei der Drehungsbeschränkungsmechanismus (58) sowohl mit dem Druckdetektor (47) als auch mit der Mutter (54) ineinandergreift.

## Revendications

1. Une unité d'injection (40) comprenant :
un cadre d'injection (51) auquel sont fixés un stator (45a) d'un moteur de plastification (45) et un stator (46a) d'un moteur d'injection (46) ;
un arbre à mouvement de rotation (52) qui est connecté à un rotor (45b) du moteur de plastification (45) de façon à être mobile vers l'avant et vers l'arrière par rapport au rotor et qui tourne en même temps que le rotor du moteur de plastification;
un arbre d'entraînement (53) qui est mobile vers l'avant et vers l'arrière par rapport au cadre d'injection (51) et qui transmet une force de propulsion générée par le moteur d'injection (46) à l'arbre à mouvement de rotation (52) ;
**caractérisé par** un détecteur de pression (47) qui est disposé entre l'arbre à mouvement de rotation (52) et l'arbre d'entraînement (53).

2. L'unité d'injection (40) selon la revendication 1,
dans laquelle l'arbre à mouvement de rotation (52) comprend une portion cylindrique (52a) et le détecteur de pression (47) est disposé à l'intérieur de la portion cylindrique.

3. L'unité d'injection (40) selon la revendication 1 ou 2,
dans laquelle un mouvement de rotation du moteur d'injection (46) est converti en un mouvement linéaire de rotation de l'arbre d'entraînement (53) et
dans laquelle le détecteur de pression (47) est disposé entre un premier palier (56) qui supporte de manière rotative l'arbre à mouvement de rotation (52) par rapport au détecteur de pression (47) et un deuxième palier (57) qui supporte de manière rotative l'arbre d'entraînement (53) par rapport au détecteur de pression (47).

4. L'unité d'injection (40) selon l'une des revendications 1 à 3, comprenant en outre :
un mécanisme de restriction de rotation (58) qui restreint une rotation du détecteur de pression (47).

5. L'unité d'injection (40) selon la revendication 4,
dans laquelle l'arbre d'entraînement (53) comprend un arbre à vis (53b) et un écrou (54), qui est vissé sur l'arbre à vis, est fixé au cadre d'injection (51) et
dans laquelle le mécanisme de restriction de rotation (58) s'emboîte avec le détecteur de pression (47) et l'écrou (54).
